(19) Europäisches Patentamt
European Patent Office
Office européen des brevets

(11) **EP 4 150 031 B1**

(12) **FASCICULE DE BREVET EUROPEEN**

(45) Date de publication et mention
de la délivrance du brevet:
**08.10.2025 Bulletin 2025/41**

(21) Numéro de dépôt: **21731245.3**

(22) Date de dépôt: **11.05.2021**

(51) Classification Internationale des Brevets (IPC):
**C10L 5/08** (2006.01)    **C10L 5/36** (2006.01)
**C10L 5/44** (2006.01)    **C10L 9/08** (2006.01)

(52) Classification Coopérative des Brevets (CPC):
**C10L 5/08; C10L 5/363; C10L 5/442; C10L 9/08;**
C10L 2290/08; C10L 2290/146; C10L 2290/148;
C10L 2290/30; Y02E 50/10; Y02E 50/30

(86) Numéro de dépôt international:
**PCT/FR2021/050809**

(87) Numéro de publication internationale:
**WO 2021/229173 (18.11.2021 Gazette 2021/46)**

(54) **PROCEDE DE PRODUCTION DE GRANULES NOIRS AMELIORE PAR GESTION DU TAUX D'HUMIDITE LORS DE LA GRANULATION**

VERBESSERTES VERFAHREN ZUR HERSTELLUNG VON SCHWARZEN PELLETS DURCH VERWALTUNG DES FEUCHTIGKEITSGEHALTS WÄHREND DER GRANULIERUNG

IMPROVED METHOD FOR PRODUCING BLACK PELLETS BY MANAGING THE MOISTURE CONTENT DURING GRANULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **11.05.2020 FR 2004622**

(43) Date de publication de la demande:
**22.03.2023 Bulletin 2023/12**

(73) Titulaire: **Europeenne de Biomasse**
**75009 Paris (FR)**

(72) Inventeurs:
• **DESPRES, Jean-Luc**
**51360 VERZENAY (FR)**
• **QUINTERO-MARQUEZ, Adriana**
**78110 LE VESINET (FR)**
• **MARTEL, Frédéric**
**51100 REIMS (FR)**

(74) Mandataire: **IP Trust**
**2, rue de Clichy**
**75009 Paris (FR)**

(56) Documents cités:
**WO-A1-2020/089187**

• **KALIYAN N ET AL: "Factors affecting strength and durability of densified biomass products", BIOMASS AND BIOENERGY, PERGAMON, AMSTERDAM, NL, vol. 33, no. 3, 1 March 2009 (2009-03-01), pages 337 - 359, XP025947810, ISSN: 0961-9534, [retrieved on 20081017], DOI: 10.1016/J.BIOMBIOE.2008.08.005**

Remarques:
Le dossier contient des informations techniques présentées postérieurement au dépôt de la demande et ne figurant pas dans le présent fascicule.

EP 4 150 031 B1

## Description

L'invention a trait au domaine des biocombustibles solides par vapocraquage d'une biomasse ligno-cellulosique. Plus particulièrement, elle concerne un procédé de production de granulés noirs dans lequel la granulation est mise en œuvre à une humidité comprise entre 12 et 20%.

## Domaine technique

La production d'énergie (électrique et thermique) d'origine renouvelable peut se faire à partir de l'environnement (soleil, vent, marée, houle, géothermie, hydraulique) ou à partir de biomasse. La biomasse, l'hydraulique de rivière ou de barrage, et la géothermie sont les seules énergies dont on peut disposer en continu. Les autres énergies renouvelables sont intermittentes à défaut de moyens de stockage de l'énergie générée.

La biomasse constitue la seule énergie primaire transportable sur son lieu de transformation en chaleur et/ou électricité. Mais elle est en fait une énergie peu dense, variable et périssable. La transformation de biomasse lignocellulosique (bois, résidus agricoles, coproduits de l'agriculture et de l'agro-industrie) en un composé dense énergétiquement, transportable et facilement stockable permet de développer et consolider une filière industrielle d'énergie stationnaire (biocombustible utilisé en un point fixe, le foyer, contrairement aux biocarburants) et de réduire les impacts environnementaux (émission $CO_2$ fossile, avec une biomasse sans fertilisants, ni phytosanitaires).

Le traitement thermique de la biomasse par vapocraquage permet cette densification de l'énergie, en homogénéisant la biomasse en une poudre vapocraquée selon des conditions paramétriques précises, notamment de granulométrie, température et temps de séjour. La poudre est ensuite granulée pour faciliter son transport, son stockage et son usage.

Il s'agit donc de s'assurer que le procédé de granulation est en mesure d'assurer un produit constant et de qualité, présentant un pouvoir calorifique et un comportement mécanique apte à être stocké, transporté et utilisé en chaudière, avec les meilleures caractéristiques de résistance mécanique et à l'eau, de réduction de formation de poussières (fines) à la manutention, de siccité pour assurer un bon pouvoir calorifique et une bonne combustion, et une stabilité dans le temps et au stockage (pas d'auto-échauffement de fermentation, de dégagement gazeux etc...)

La granulation par passage de la poudre vapocraquée en presse à granuler permet de former des granulés noirs denses et résistants. En effet, le granulé noir de feuillu présente une densité apparente de 650 à 750 g/L, avec une résistance mécanique (durabilité) de 98,5% et un PCI/brut >5,0 kWh/kg pour moins de 10% d'humidité (égale ou très proche de 10% usuellement). Il a une résistance à l'immersion qui lui permet de capter de manière réversible moins de 10% de son poids en eau sans modification notable de sa durabilité après séchage. Classiquement, pour le granulé blanc, la sciure de résineux affinée et compressée produit des granulés entre 6, 8 et 10 mm de diamètre, 2 à 5 cm de longueur, d'une densité apparente de 600 à 650 g/L, avec une résistance mécanique (durabilité) de 97,5% et un PCI/brut de 4,9 kWh/kg pour moins de 8% d'humidité (entre 5 et 8% usuellement). Le granulé blanc n'a cependant aucune résistance à l'eau (il se délite entièrement dans l'eau en moins de 5 minutes). Le granulé noir présente donc des avantages par rapport au granulé blanc, si ce n'est que son procédé de production en plus coûteux, notamment en énergie. En particulier, l'humidité résiduelle du granulé noir nuit à son PCI/brut, mais est nécessaire pour une bonne granulation, plus que pour le granulé blanc.

Pour limiter l'effet négatif de l'humidité sur la capacité énergétique du granulé noir, la poudre vapocraquée peut être granulée à plus basse humidité (entre 5% et 8%). Toutefois, il a été montré par des essais de granulation réalisés sur de la poudre de bois après vapocraquage en particulier sur les espèces de feuillus durs, que la granulation était incomplète et présentait plusieurs défauts :

- Granulés non lisses présentant de nombreuses aspérités entrainant une perte de durabilité ;
- Granulés non complètement formés avec pour conséquence qu'une partie de la matière reste accrochée dans les trous de la filière de la presse à granuler ;
- Manque de densité apparente (moins 15 à 20% par rapport aux objectifs de 650 à 750 g/l).

La maitrise du taux d'humidité apparait donc comme un paramètre important du procédé de production de granulés noirs à haut pouvoir calorifique et présentant une bonne résistance mécanique.

Dans d'autres secteurs comme celui du granulé blanc, on peut améliorer la granulation par ajout d'additif (amidon par exemple ou farines ou minéraux). Mais le surcoût, la gène à la combustion, l'usage de produit alimentaire, n'est pas en ligne avec les attendus des utilisateurs de granulés noirs.

Il existe donc un besoin d'améliorer l'étape de granulation des granulés noirs pour renforcer la qualité des produits obtenus.

Certain document de l'art antérieur évoque des procédés permettant d'obtenir des granulés par une étape de granulation. Par exemple, le brevet WO2020/089187A1 décrit un procédé de fabrication d'une matière combustible présentant un pouvoir calorifique inférieur, supérieur ou égal à 5,29 MWh/t, destinée notamment à une chaudière industrielle, à partir de plaquettes de bois dont une portion substantielle est issue de bois de feuillus. Le procédé comprend une étape de granulation de la biomasse après vapocraquage et séchage, ayant un taux d'humidité de 10%.

Il est également connu de l'art antérieur que la variation de certains paramètres peuvent améliorer la qualité des granulés. En outre, le document KALIYAN ET AL « Factors affecting strenght and durability of densified biomass products » décrit une étude de l'efficacité des processus de densifications dans la production de produits densifiés résistants, tels que les pellets et les briquettes. Ce document décrit l'effet de plusieurs facteurs pouvant influencer la qualité des produits densifiés obtenus. Parmi les facteurs étudiés, ce document divulgue que l'eau est un facteur permettant d'améliorer la durabilité des produits densifiés notamment sur le foin d'alfalfa ayant un taux d'humidité compris entre 10% et 23% (page 354, colonne de gauche, 1er alinéa).

## Exposé de l'invention

Les inventeurs ont mis en évidence que la granulation est meilleure lorsque la poudre vapocraquée est humide.

Ainsi, la présente invention concerne un procédé de granulation de biomasse vapocraquée consistant à :

- introduire dans le granulateur ladite biomasse vapocraquée à un taux d'humidité compris entre 12% et 20%,
- procéder à une humidification avant le traitement de granulation si le taux d'humidité de ladite biomasse vapocraquée est inférieur à une valeur seuil comprise entre 12% et 20%,
- procéder à la granulation,
- procéder, après granulation à un séchage, si l'humidité dans les granulés est supérieure à 10%, afin de réduire l'humidité des granulés à un taux inférieur ou égal à 10%.

L'invention propose donc de granuler la poudre de biomasse vapocraquée dans des conditions d'humidité non usuelles, afin de mieux réussir le conditionnement des granulés en leur donnant les propriétés attendues de tenue mécanique, de cohésion, de résistance à l'eau et de pouvoir calorifique accru.

## Avantages de l'invention

De manière tout à fait inattendue, les inventeurs ont montré que la granulation de la biomasse vapocraquée est de meilleure qualité lorsqu'elle est réalisée avec un taux d'humidité d'au moins 10%, compris de préférence entre 10 et 27%. Au contraire, l'enseignement de l'art antérieur incite l'homme du métier à granuler très sec. Ici on ne sèche que les granulés, à la fin du procédé.

De manière encore plus surprenante, les inventeurs ont découvert que lorsque le processus de granulation s'effectuait à l'échelle industrielle et notamment avec des presses chauffantes, le taux d'humidité des granulés sortant est inférieur à celui de la biomasse vapocraquée entrante. Ainsi, une biomasse vapocraquée entrante comportant un taux d'humidité compris entre 13 et 15% fournira des granulés à un taux d'humidité égal ou inférieur à 10% d'humidité. L'avantage de ce procédé est que l'étape de séchage après granulation devient alors optionnelle, uniquement appliquée lorsque le taux d'humidité des granulés sortant est supérieur à 10% d'humidité et/ou que la biomasse vapocraquée entrante comporte un taux d'humidité compris entre 15 et 20%.

Ainsi, ce procédé propose avantageusement d'optimiser le séchage pour réduire l'impact écologique et économique du processus. Il s'agit donc de mieux maîtriser la granulation, par ajout d'eau ou de vapeur ou par utilisation d'une biomasse vapocraquée considérée comme humide car elle comprend un taux d'humidité compris entre 12 à 20%. L'ajout de vapeur d'eau à la poudre vapocraquée produit trois effets intéressants : le chauffage modifie le comportement rhéologique de la poudre, et entraine éventuellement aussi une modification chimique (cuisson, solubilisation, réticulation), et l'humidifie par apport d'eau venant de la condensation de la vapeur. Les essais ont montré, de manière contreintuitive pour l'homme du métier, l'intérêt d'augmenter l'humidité totale de la poudre vapocraquée du granulé noir entre 10% et 27%, alors que sur la sciure affinée du granulé blanc, cet ajout n'a pas d'effet, voire un effet négatif. De manière alternative, l'utilisation d'une biomasse vapocraquée humide permet d'économiser d'éventuels coûts liés au séchage de la biomasse après vapocraquage.

Si la recherche d'une certaine humidité par l'ajout d'eau ou de vapeur pendant le procédé ou par utilisation d'une biomasse vapocraquée humide peut paraitre aller *a priori* à l'encontre des besoins d'obtenir des granulés dont le taux d'humidité est bas (typiquement compris entre 6% et 10%), elle permet de moins sécher la biomasse en amont du vapocraquage, donc de réduire les besoins énergétiques en début de procédé. De plus, si le coût énergétique lié au vapocraquage en conditions humides est un peu plus élevé, on gagne en efficacité de granulation et l'on obtient un granulé présentant une résistance mécanique accrue. Le procédé doit être considéré dans sa globalité du point de vue de son bilan énergétique et de la qualité des granulés produits. Ici, le procédé est donc avantageux dans sa globalité, puisque la quantité d'eau à évaporer est la même au total et que le granulé obtenu présente une résistance accrue ouvrant le champ à l'élargissement du marché actuel et à de nouveaux marchés.

La maîtrise de la granulation est acquise et a montré l'intérêt de la gestion de l'eau / vapeur pour la granulation, selon les poudres vapocraquées choisies (feuillues ou résineux) et quel que soit le système de chauffage choisi.

Le problème de l'augmentation du coût lié à l'introduction de nouveaux investissements et coûts opératoires d'humidification et de séchage peut être résolu en limitant l'ajout d'eau par optimisation (en choisissant à quelles poudres vapocraquées on l'applique par exemple), et en utilisant les silos comme zone de séchage. De plus, le taux d'humidité constitue un nouveau paramètre permettant de maitriser la qualité du granulé obtenu donc d'être en mesure d'assurer de manière constante une qualité élevée de granulés.

## DESCRIPTION DETAILEE DE L'INVENTION

L'invention concerne un procédé de granulation de biomasse vapocraquée consistant à :

- introduire dans le granulateur ladite biomasse vapocraquée à un taux d'humidité compris entre 12 et 20%,
- procéder à une humidification avant le traitement de granulation si le taux d'humidité de ladite biomasse vapocraquée est inférieur à une valeur seuil comprise entre 12% et 20%,
- procéder à la granulation,
- procéder, après granulation à un séchage, si l'humidité dans les granulés est supérieure à 10% afin de réduire l'humidité des granulés à un taux inférieur ou égal à 10%.

Dans un mode de réalisation préféré de l'invention, le taux d'humidité de ladite biomasse vapocraquée entrant dans le granulateur est compris entre 13% et 15% avec ou sans humidification préalable.

La granulation de biomasse vapocraquée en conditions d'humidité comprise entre 10% et 27% produit un granulé noir de meilleure qualité. Les granulés ont une qualité encore meilleure si le taux d'humidité est compris entre 12 à 20% et davantage encore si ledit taux est compris entre 13 à 15%. En effet, l'utilisation d'un taux d'humidité plus important permet de faciliter l'étape de granulation tout en conservant la qualité des granulés qui ont une hydrophobie plus élevée, se conservent plus longtemps et sont plus résistant à la manutention.

L'utilisation d'une biomasse vapocraquée comprenant un taux d'humidité entre 13 à 15% à l'échelle industrielle, permet de ne pas appliquer d'étape de séchage des granulés après l'étape de granulation. Cela permet également d'utiliser une biomasse vapocraquée directement après le vapocraquage, sans forcément avoir recours à une étape de séchage au préalable. En effet, lorsque le taux d'humidité est compris entre 13 à 15%, l'étape de granulation suffit à réduire l'humidité. Les granulés obtenus ont alors un taux d'humidité à la sortie du granulateur inférieur ou égal à 10%. Dans un mode de réalisation préféré, le taux d'humidité est compris entre 6 à 8%.

Par « échelle industrielle », on entend au sens de l'invention que la puissance des presses industrielles (1 à 10 tonnes/h) permet d'échauffer vers 80-90°C la poudre vapocraquée pendant quelques secondes et qui permet de vaporiser l'eau de la poudre et réduire l'humidité, ce que l'on ne voit pas sur des presses à granuler à l'échelle pilote (50 kg à 500 kg/h)

Lorsque le taux d'humidité des granulés est supérieur à 10%, on applique alors une étape de séchage des granulés pour réduire le taux d'humidité à une valeur égale ou inférieur à 10%. Ainsi, l'étape de séchage est optionnelle et dépend du taux d'humidité des granulés obtenus à la fin de l'étape de granulation.

Lorsque le taux d'humidité de la biomasse vapocraquée est inférieure à un taux défini, choisi entre 12% et 20%, on humidifie la biomasse avant granulation. Cette humidification peut être réalisée par injection de vapeur ou par pulvérisation d'eau sur la surface de la biomasse. Elle peut également être réalisée par injection d'eau ou de vapeur dans le malaxeur alimentant le granulateur.

On peut avantageusement utiliser une partie des vapeurs usées issues du vapocraquage (évaporats) pour humidifier la biomasse (jusqu'à 20%). On récupère ainsi une partie de la matière sèche perdue dans le procédé sous forme de COV, et on économise de l'eau et on traite une partie des condensats.

Par « biomasse vapocraquée », on entend une biomasse lignocellulosique soumise à un traitement thermique sous pression, suivi d'une dépressurisation brutale qui permet d'exploser les fibres et de produire une poudre. La qualité de la poudre (granulométrie, couleur, texture...) dépend des conditions de sévérité appliquées pendant le traitement (pression, température et durée).

A titre d'exemple, le traitement thermique de la biomasse peut être réalisé avec de la vapeur légèrement saturée à une température comprise entre 195°C et 215°C. Le temps de traitement s'établit entre 5 et 30 minutes.

Le Facteur de Sévérité du traitement est défini par la formule :

$$FS = Log10(temps(min)*exp((T°C-100)/14.75)).$$

Plus la température est élevée et plus la durée de traitement est longue, plus la sévérité augmente et plus on constate de transformation dans le produit. L'homme du métier saura adapter la sévérité en fonction de la biomasse initiale et du rendu souhaité.

Dans un mode de réalisation préféré, aucun additif (coûteux ou non souhaité) n'est ajouté à la biomasse avant granulation.

Après mélange et homogénéisation de la poudre vapocraquée, la granulation est effectuée dans une presse à granuler. Dans un mode de réalisation particulier, la presse à granuler est chauffante, permettant ainsi, d'induire un assèchement de la biomasse lors du processus de granulation, lorsque celui-ci est réalisé à l'échelle industrielle.

La presse doit être très comprimante afin que le produit ressorte de la presse avec une masse volumique supérieure à 700 g/L, voire à 750 g/L. A ce moment, l'humidité du granulé se situe entre 12 et 20%, de préférence entre 13% et 15%. Il doit être séché pour assurer une bonne qualité et notamment un bon pouvoir calorifique.

Le séchage peut être réalisé de différentes façons :

○ dans un séchoir vertical (caisson) ou horizontal (séchoir à tapis) à air sec et chaud (environ 100°C). Un échangeur eau /air peut être utilisé.
○ par un séchage naturel en extérieur
○ par ventilation de plusieurs jours en cellule de stockage avec un air dont l'humidité est maitrisée.

Quel que soit le moyen de séchage utilisé, le granulé final doit avoir un taux d'humidité compris entre 6% et 10%, de préférence entre 6% et 8%.

La gestion de l'humidité tout au long du procédé nécessite des outils supplémentaires par rapport à un procédé classique. En effet, dans un procédé classique, l'humidité est réglée une fois pour toute par un sécheur avant broyage-affinage pour les granulés blancs et avant vapocraquage pour les granulés noirs. Le fait de réhumidifier impose de pouvoir contrôler l'humidité au vapocraquage (une partie de la vapeur peut condenser et augmenter l'humidité ou au contraire « flasher » et diminuer l'humidité) ou à la granulation (qui se déroule à chaud sous pression, une partie de l'eau se vaporise plus ou moins). Il faut donc disposer un sécheur-finisseur après granulation pour terminer à l'humidité attendue par le client.

Pour permettre la mise en œuvre du procédé précédemment décrit, l'installation comprenant l'unité de vapocraquage et l'unité de granulation doit également comprendre :

-    des capteurs d'humidité situés en amont de l'unité de granulation afin de mesurer le taux d'humidité de la biomasse vapocraquée ;
-    des injecteurs de vapeur ou des vaporisateurs d'eau situés entre l'unité de vapocraquage et l'unité de granulation, associés à des moyens de contrôle du débit pour atteindre le taux d'humidité souhaité ;
-    des systèmes de séchage positionnés en sortie de granulateur et des capteurs d'humidité dynamique situés au niveau des refroidisseurs/tamiseurs ou dans les silos de stockage de sorte à pouvoir sécher les granulés par déshydratation du au renouvellement de l'air ambiant.

Les utilisateurs de ce procédé sont notamment les industriels qui cherchent à optimiser la production de biocombustibles sous forme de granulés noirs en standardisant le produit final à l'humidité (donc au PCI, durabilité et résistance à l'eau souhaités).

## EXEMPLES

Plusieurs essais ont été réalisés après ajout d'eau et maturation de plusieurs heures avec une humidité finale de la poudre située entre 15 et 25 %. Ils ont permis de fabriquer des granulés bien formés et de bonne qualité mais dont l'humidité finale se situait entre 13 et 18%. L'humidité finale désirée sur le granulé doit se situer entre 5 et 8%. Une étape de séchage doit donc être réalisée après granulation.

Variante N°1

Après vapocraquage et homogénéisation, la granulation humide est réalisée à faible compression afin de fabriquer des mini-granulés humides qui se tiennent (presse horizontale type Kahl par exemple).

Puis on effectue un séchage dans un séchoir à lit fluidisé. L'air chaud est produit à partir d'un échangeur eau chaude /air.

Puis on termine par une granulation classique à humidité inférieure à 10%.

Variante N°2

Le vapocraquage est réalisé avec une teneur en eau de la matière première comprise entre 8% et 12%. La matière vapocraquée est ensuite humidifiée entre 12% et 27% d'humidité.

La durée de maturation peut être de plusieurs heures.

Ensuite ont lieu la granulation et le séchage selon procédé et la variante n°1.

**Revendications**

1. Procédé de granulation de biomasse vapocraquée consistant à :

   - introduire dans le granulateur ladite biomasse vapocraquée à un taux d'humidité compris entre 12% et 20%,
   - procéder à une humidification avant le traitement de granulation si le taux d'humidité de ladite biomasse vapocraquée est inférieur à une valeur seuil comprise entre 12% et 20 %,
   - procéder à la granulation,
   - procéder, après granulation, à un séchage si l'humidité dans les granulés est supérieure à 10% afin de réduire l'humidité des granulés à un taux inférieur ou égal à 10%.

2. Procédé, selon la revendication 1, dans lequel le taux d'humidité de ladite biomasse vapocraquée entrant dans le granulateur est compris entre 13 à 15% avec ou sans humidification au préalable.

3. Procédé selon l'une des revendications 1 ou 2 dans lequel ladite humidification est réalisée par injection de vapeur ou d'eau par pulvérisation sur la surface de la biomasse.

4. Procédé selon l'une des revendications 1 ou 2 dans lequel ladite humidification est réalisée par injection d'eau ou vapeur dans le malaxeur alimentant le granulateur.

5. Procédé selon l'une des revendications précédentes dans lequel on utilise une partie des vapeurs issues du vapocraquage (évaporats) pour humidifier la biomasse.

6. Procédé selon l'une des revendications précédentes dans lequel l'humidité desdits granulés est réduite à un taux compris entre 6% et 10%.

7. Procédé selon la revendication 6 dans lequel l'humidité desdits granulés est réduite à un taux compris entre 6% et 8%.

**Patentansprüche**

1. Verfahren zum Granulieren von dampfgecrackter Biomasse, bestehend aus:

   - Einführen der dampfgecrackten Biomasse mit einem Feuchtigkeitsgehalt zwischen 12 % und 20 % in den Granulator,
   - Durchführen einer Befeuchtung vor der Granulierungsbehandlung, falls der Feuchtigkeitsgehalt der dampfgecrackten Biomasse unter einem Schwellenwert zwischen 12 % und 20 % liegt,
   - Durchführen der Granulierung,
   - Durchführen, nach der Granulierung, einer Trocknung, falls die Feuchtigkeit in den Granulaten größer als 10 % ist, um die Feuchtigkeit der Granulate auf einen Gehalt von kleiner als oder gleich 10 % zu verringern.

2. Verfahren nach Anspruch 1, wobei der Feuchtigkeitsgehalt der dampfgecrackten Biomasse, die in den Granulator eintritt, mit oder ohne vorherige Befeuchtung zwischen 13 bis 15 % liegt.

3. Verfahren nach einem der Ansprüche 1 oder 2, wobei die Befeuchtung durch Einspritzen von Dampf oder Wasser durch Aufsprühen auf die Oberfläche der Biomasse erfolgt.

4. Verfahren nach einem der Ansprüche 1 oder 2, wobei die Befeuchtung durch Einspritzen von Wasser oder Dampf in den Mischer erfolgt, der den Granulator speist.

5.  Verfahren nach einem der vorstehenden Ansprüche, wobei ein Teil der Dämpfe, die aus dem Dampfcracken (Evaporate) stammen, zum Befeuchten der Biomasse verwendet wird.

6.  Verfahren nach einem der vorstehenden Ansprüche, wobei die Feuchtigkeit der Granulate auf einen Gehalt zwischen 6 % und 10 % verringert wird.

7.  Verfahren nach Anspruch 6, wobei die Feuchtigkeit der Granulate auf einen Gehalt zwischen 6 % und 8 % verringert wird.

**Claims**

1.  Method for granulating steam-cracked biomass, consisting in:

    - introducing said steam-cracked biomass into the granulator at a moisture content of between 12% and 20%,
    - proceeding with humidification prior to the granulation treatment if the moisture content of said steam-cracked biomass is below a threshold value of between 12% and 20%,
    - proceeding with granulation,
    - after granulation, if the moisture in the granules exceeds 10%, proceeding with drying in order to reduce the moisture content of the granules to a level of 10% or less.

2.  Method according to claim 1, wherein the moisture content of said steam-cracked biomass entering the granulator is between 13 to 15%, with or without prior humidification.

3.  Method according to either claim 1 or claim 2, wherein said humidification is carried out by injecting steam or water by spraying onto the biomass surface.

4.  Method according to either claim 1 or claim 2, wherein said humidification is carried out by injecting water or steam into the mixer feeding the granulator.

5.  Method according to any of the preceding claims, wherein part of the vapors from the steam cracking (evaporates) is used to moisten the biomass.

6.  Method according to any of the preceding claims, wherein the moisture content of said granules is reduced to a level of between 6% and 10%.

7.  Method according to claim 6, wherein the moisture content of said granules is reduced to a level of between 6% and 8%.

## EP 4 150 031 B1